# DEMANDE DE BREVET EUROPEEN

(11) **EP 4 112 566 A1**
(43) Date de publication de la demande: **04.01.2023**
(21) Numéro de dépôt: 22182354.5
(22) Date de dépôt: 30.06.2022
(51) Int. Cl.: C02F 3/10, C02F 3/04, B01D 39/04, C02F 3/12, C02F 1/28, C02F 101/16, C02F 1/00, C02F 103/00

(54) **MATÉRIAU FILTRANT DESTINÉ AU TRAITEMENT DES EAUX USÉES**

(30) Priorité: 30.06.2021 BE 202105511; 06.01.2022 BE 202205004
(71) Demandeur: Eloy Water SA, 4140 Sprimont (BE)
(72) Inventeur: ELOY, Olivier, 4140 Sprimont (BE); DESMOLLES, Matthias, 31400 Toulouse (FR); VILLALOBOS GARCIA, Jesús, 31400 Toulouse (FR); COLLIENNE, Amandine, 4860 Wegnez (BE); VAN BUGGENHOUT, Cynthia, 4860 Cornesse (BE); PAULUS, Alexandre, 4870 Trooz (FR)
(74) Mandataire: Calysta NV

(57) **Abrégé**

Matériau filtrant végétal destiné au traitement des eaux usées comprenant de la cellulose et de la lignine, ledit matériau filtrant végétal étant caractérisé en ce qu'il comprend des morceaux de bois formant une population de morceaux, ladite population de morceaux présentant une distribution de tailles de particules comprise entre 3 mm et 25 mm et lesdits morceaux de bois étant des morceaux de bois torréfié.

## Description

La présente invention se rapporte à un matériau filtrant végétal destiné au traitement des eaux usées comprenant de la cellulose et de la lignine.

Le traitement des eaux usées comprend trois grands axes, les eaux usées domestiques, municipales et industrielles. Les eaux usées domestiques comprennent les eaux usées des habitations particulières, mais aussi les eaux usées de petites collectivités comme par exemples d'un complexe hôtelier, de camping, d'un lotissement, de bureaux, d'immeubles résidentiels, de petits villages.

Les eaux usées domestiques biodégradables ne peuvent pas être directement rejetées dans un milieu hydraulique superficiel mais doivent préalablement subir des traitements d'épuration ayant pour fonction de diminuer leur caractère polluant, de façon à leur permettre de satisfaire à des normes qui ont été établies par la législation.

De manière classique, les eaux usées sont soumises à un prétraitement anaérobie, combiné à un processus de décantation, dans une cuve de décantation, communément appelée fosse septique ou fosse toutes eaux, ce qui permet de séparer une grande partie des matières en suspension (MES) et éventuellement des flottants. Ce prétraitement peut être suivi d'un traitement aérobie des eaux clarifiées par des bactéries.

Différents fabricants proposent actuellement sur le marché des dispositifs d'assainissement des eaux usées formés par une association entre une fosse septique ou fosse toutes eaux et un filtre monté en aval de cette fosse.

Un tel filtre comporte une enceinte étanche destinée à être enterrée, est munie d'une tubulure d'entrée des effluents provenant de la fosse septique ou fosse toutes eaux et d'une tubulure de sortie des effluents filtrés.

Cette enceinte accueille un massif ou lit filtrant formé par un matériau filtrant support de biomasse aérobie.

Le matériau filtrant idéal présente une grande durée de vie et des performances épuratoires adéquates. Les performances épuratoires peuvent être directes ou indirectes. Par exemple, le charbon actif présente une performance épuratoire directe en neutralisant directement des polluants présents dans les effluents lorsque ces polluants sont au contact du charbon actif. Alternativement, un matériau filtrant qui permet la croissance de bactéries qui y adhèrent pour digérer les polluants aura une performance épuratoire indirecte. Bien entendu, les deux types de performances épuratoires sont parfois combinées.

Par exemple, différentes propriétés physiques et chimiques se sont révélées importantes comme :
- la rétention massique ou volumique en eau qui définit la capacité du matériau filtrant à retenir une grande quantité d'eau liée au sein de la porosité intra particulaire après séchage (élimination de l'eau libre), pour maintenir le matériau humide. Une humidité maintenue dans le matériau au cours du temps permet au matériau de créer un environnement favorable à l'activité bactérienne des bactéries qui y adhèrent, et ce même en l'absence d'alimentation en effluents contenant de la matière à digérer. En revanche une rétention en eau trop élevée peut aussi créer une dégradation accélérée du matériau. De plus, lorsque le matériau forme un lit ou massif filtrant, il est également important d'avoir un profil de teneur en eau dans le matériau filtrant homogène dans le volume du massif ou lit filtrant, et ce de manière à avoir un biofilm uniforme et efficace dans le volume du lit filtrant ou du massif filtrant.
- Le tassement hydraulique correspondant au tassement du matériau filtrant après déversement d'une quantité d'eau importante sur le matériau filtrant, la quantité d'eau importante correspondant par exemple à 2 fois le volume total du matériau filtrant en moins de 5 minutes. Un tassement hydraulique élevé rendra le matériau filtrant moins résistant à la dégradation et provoquera une réduction d'efficacité du matériau filtrant au cours du temps. En effet, un tassement hydraulique très faible, par exemple inférieur à 3% par rapport à un volume initial du matériau filtrant, assure une bonne conservation du matériau filtrant sans risque de colmatage et/ou sans réduction des performances épuratoires du matériau filtrant.

- La teneur en matières hydrosolubles présentes dans le matériau filtrant permet d'évaluer le pourcentage massique de matière qui sera lessivé par la circulation d'eau. Ceci traduit deux phénomènes, d'une part une libération de matières hydrosolubles issue du matériau filtrant, provoquant sa dégradation, et d'autre part, la libération par lessivage de ces matières hydrosolubles qui se retrouvent dans les eaux filtrées. Un pourcentage trop élevé en matières hydrosolubles, par exemple supérieur à 10%, ne donne pas un matériau filtrant stable au cours du temps.
- La capacité en air représentant l'espace interstitiel disponible entre des particules ou des grains du matériau filtrant pour une circulation de l'oxygène requis pour la digestion aérobie par les bactéries. Une bonne capacité en air permet une oxygénation optimale du matériau et donc un développement d'un biofilm aérobie favorable à une épuration efficace.

Concernant les performances de la digestion aérobie, un matériau filtrant est adéquat s'il permet un maintien durable de la population bactérienne pour une digestion aérobie optimale une fois colonisé par la population bactérienne. Un matériau filtrant colonisé par la population bactérienne diminue dans les eaux usées :
- la pollution carbonée définie par la demande biologique en oxygène sur 5 jours (DBOs),
- la quantité de matières en suspension,
- la demande chimique en oxygène,
- la pollution azotée résultant du traitement de l'azote présent dans les eaux usées par les bactéries qui dégradent l'ammonium (NH₄) et produisent des nitrates (NO_{3⁻}).

En plus de posséder de bonnes propriétés physiques et chimiques et de bonnes performances épuratoires lorsqu'il est colonisé, il est important que le matériau filtrant soit bon marché de manière à être rentable économiquement, qu'il soit aussi abondant, facile d'accès quel que soit le territoire donné, et écologique.

Un filtre dont le matériau filtrant est préparé à base d'écorces de pin est connu par exemple du document EP2976301. Selon ce document, un matériau filtrant à base d'écorces de pin est léger et permet d'obtenir des performances épuratoires en accord avec la réglementation en assainissement domestique. Cependant, les écorces de pin sont sensibles au tassement hydraulique impactant ainsi la durabilité du matériau filtrant.

Un autre filtre dont le matériau filtrant est constitué exclusivement de fibres en vrac de chènevotte de chanvre est connu du document WO201713312. Ce document propose un système de filtration compact tout en évitant le colmatage du filtre, et permettant de ne pas remplacer trop fréquemment le matériau filtrant. Cependant, la disponibilité du chanvre est non uniforme à l'échelle mondiale avec la Chine qui produit près de la moitié de la production mondiale. Le reste étant cultivé essentiellement en France, en République démocratique de Corée et en Espagne.

Par ailleurs, un filtre dont le matériau filtrant renferme au moins une couche de coquilles de noisettes concassées est connu du document EP3008018. Selon ce document, ce filtre est destiné à une filière d'assainissement domestique des eaux usées basé sur un massif filtrant renfermant un matériau disponible en grande quantité, donc peu onéreux et présentant parallèlement des performances de filtration totalement satisfaisantes. Bien que ce document vante les mérites de sa technologie, la disponibilité des coquilles de noisette à l'échelle mondiale s'étend le long d'une bande de latitude entre 30 et 45° nord. De plus, suivant ce document, il est préférable que le filtre possède une couche de ré-aération en matière plastique entre deux couches de coquilles de noisettes, et ce pour favoriser le développement de bactéries aérobies. L'utilisation d'une couche en matière plastique représente donc un impact environnemental néfaste de ce filtre. Enfin, les cultures de noisetiers sont souvent attaquées par des insectes comme le balanin des noisettes. Pour lutter contre cet insecte nuisible dans des cultures intensives, des insecticides sont utilisés. Ceux-ci se retrouveront inévitablement sur les coques de noisettes, ce qui peut engendrer une pollution dans le traitement des eaux usées lorsque des coquilles de noisettes sont utilisées comme matériau filtrant.

Finalement, le document FR2331515 mentionne un support de lits bactériens pour épurer les eaux résiduaires domestiques et industrielles à l'aide de charbon d'origine végétale qui présente une faible densité apparente et ayant un grand pouvoir hydrophile. Le procédé de fabrication de ce charbon d'origine végétale hydrophile comporte une étape de traitement du bois avec un acide sulfurique pour le défibrer. Ensuite, ce bois défibré est pyrolysé pour former du charbon d'origine végétale. Selon ce document, ce charbon possède de bonnes capacités épuratoires. Par contre, sachant que le bois doit être traité avec des produits chimiques comme l'acide sulfurique et doit être pyrolysé entraînant une consommation importante d'énergie thermique, ce procédé d'obtention de ce charbon d'origine végétale n'est pas écologique et présente une rentabilité économique limitée. De plus, le document US20160200602A1 décrit un matériau poreux hydrophobe à base de lignine et de cellulose liant des hydrocarbures. Ce matériau, avantageusement flottant, est destiné à absorber des hydrocarbures, par exemple en cas de pollution marine, mais peut également être destiné à traiter des eaux usées. Ce document mentionne que dans un mode de réalisation particulier le matériau est modifié thermiquement à une température comprise entre 160°C et 260°C et que les fibres de bois absorbe moins d'eau en raison de la modification thermique et en raison d'additifs hydrophobes ajoutés à ce matériau poreux.

Malheureusement, comme on peut le constater, les matériaux filtrants tels que décrits ci-dessus présentent encore de nombreux inconvénients. En effet, si certains possèdent une durée de vie acceptables et/ou des performances épuratoires en accord avec la législation, la disponibilité de certains matériaux reste problématique. Pourtant, il est important, d'autant plus dans des domaines d'application à impact environnemental, d'entrerdans un processus d'économie circulaire impliquant que le matériau filtrant soit bon marché de manière à être rentable économiquement, qu'il soit aussi abondant, facile d'accès, et écologique.

La présente invention a pour but de pallier ces inconvénients en procurant un matériau filtrant peu coûteux, abondant, facile d'accès, écologique et présentant des caractéristiques de durabilité et des caractéristiques épuratoires adéquates, tant à l'état colonisé qu'en vrac. Pour ceci, la présente invention procure un matériau filtrant végétal caractérisé en ce qu'il comprend des morceaux de bois formant une population de morceaux, ladite population de morceaux présentant une distribution de tailles de particules comprise entre 3 mm et 25 mm et lesdits morceaux de bois étant des morceaux de bois torréfié.

Au sens de la présente invention, on entend par le terme «morceaux», par exemple des plaquettes, des grains, des fibres, des briquettes, des billes ou des granulés.

Selon la présente invention, un matériau filtrant comprenant des morceaux de bois torréfié selon une distribution granulométrie des morceaux de bois torréfié comme précité présente des caractéristiques physico-chimiques qui permettent d'obtenir une rétention en eau massique suffisamment faible pour éviter une dégradation rapide du matériau et suffisante pour le développement du biofilm aérobie et présente également un faible pourcentage de matière hydrosoluble compatible avec une conservation optimale du matériau filtrant. Selon la présente invention, le matériau filtrant présente également sous forme de lit filtrant une capacité en air favorable au développement d'un biofilm aérobie et une très bonne résistance au tassement hydraulique.

En effet, contre toute attente, d'une part, les morceaux de bois torréfié permettent un développement et un maintien de la population bactérienne qui permet une digestion aérobie de la matière organique en suspension dans les eaux usées et d'autre part, les morceaux de bois torréfié sont résistants au tassement hydraulique et permettent de préparer un lit filtrant approprié.

Le bois torréfié est connu en tant que combustible car il possède une grande valeur énergétique et est par conséquent de plus en plus utilisé dans le secteur de la bioénergie. Le bois torréfié est également de plus en plus utilisé dans le mobilier comme par exemple pour des clôtures, des meubles de jardin, des planchers, etc...

Il est également connu qu'une biomasse torréfiée possède des caractéristiques de broyabilité plus importante que la biomasse brute correspondante (Baptiste Colin. *Modélisation de la torréfaction de plaquettes de bois en four tournant et validation expérimentale à l'échelle d'un pilote continu de laboratoire.* Génie des procédés. Ecole des Mines d'Albi-Carmaux, 2014. Français. NNT : 2014EMAC0015). Une plus grande broyabilité du bois torréfié le rend plus maniable.

Il a été mis en évidence selon la présente invention que malgré la broyabilité plus aisée du matériau torréfié, les morceaux de bois torréfié sélectionnés pour présenter une distribution granulométrique entre 3 et 25 mm présentent une résistance au tassement hydraulique suffisante pour former un lit filtrant durable. De plus, des morceaux de bois torréfié ayant une distribution granulométrique entre 3 et 25 mm fournissent également des propriétés de rétention d'eau adéquates tout en présentant une teneur en matières hydrosolubles réduites grâce à la torréfaction qui réduit la teneur des matières hydrosolubles présentes dans le bois et détruit les hémicelluloses pariétales ainsi que les sucres accessibles. En conséquence, le bois devient résistant aux attaques de champignons, insectes xylophages et bactéries, ce qui augmente sa durabilité. Pourtant, malgré que le bois torréfié soit résistant aux attaques des microorganismes, il s'avère un support pour la population bactérienne tout à fait satisfaisant et le développement ainsi que le maintien du biofilm est favorable. Le lit filtrant formé des morceaux de bois torréfié présente également une capacité en air appropriée au développement et au maintien du biofilm bactérien.

De plus, la torréfaction du bois permet de modifier la structure du bois à plus basse température que la pyrolyse, donc en utilisant moins d'énergie et sans ajout de produit chimique, ce qui rend le processus de torréfaction plus rentable et plus écologique par rapport au processus de pyrolyse du bois précité.

En outre le bois, matière première du bois torréfié, est peu coûteux et durable. De plus, les morceaux de bois torréfié sont formés de déchets de scierie, de production, de coupe et forment ainsi un sous-produit pour lequel le traitement des eaux usées devient une voie de valorisation. Le bois étant une ressource abondante dans de nombreux territoires, le matériau filtrant suivant la présente invention est en parfait accord avec une économie circulaire efficace, rentable et écologique en permettant une application industrielle quel que soit le territoire.

Préférentiellement, dans le matériau filtrant destiné au traitement des eaux usées selon la présente invention, lesdits morceaux de bois torréfié sont des plaquettes de bois torréfié.

Au sens de la présente invention, on entend par le terme « plaquette de bois torréfié » un corps de bois torréfié possédant une forme définie par trois dimensions, par exemple une épaisseur, une longueur et une largeur, et dans laquelle une des dimensions, par exemple l'épaisseur, est plus petite que les deux autres dimensions.

Avantageusement, dans le matériau filtrant destiné au traitement des eaux usées selon la présente invention, ladite population de morceaux comprend une première population de morceaux présentant une distribution de tailles de particules comprise entre 3 mm et 10 mm et une deuxième population de morceaux présentant une distribution de tailles de particules supérieure à 10 mm, de préférence supérieure à 12 mm, et de préférence inférieure ou égale à 25 mm, ledit matériau filtrant présente une masse de la première population supérieure à celle de la deuxième population. En effet, une répartition adéquate de la distribution de taille des morceaux de bois torréfié en ayant plus de morceaux dont la distribution de tailles est comprise entre 3 mm et 10 mm permet d'optimiser la surface spécifique du lit filtrant, c'est à dire à la fois la surface interstitielle entre les morceaux et la surface tenant compte de la porosité des morceaux, pour un développement d'un biofilm bactérien, ce qui augmentera les performances épuratoires du matériau filtrant. De plus, une telle répartition de tailles des morceaux permet également une meilleure résistance au tassement et à la dégradation. De préférence, le rapport entre la masse de la première population de morceaux divisée par la masse de la deuxième population de morceaux est supérieur à 1, préférentiellement supérieur ou égal à 1,2 plus préférentiellement supérieur ou égal à 1,4, 1,5, 1,8, 2, 2,5, 3, 3,5, 4.

Préférentiellement, le matériau filtrant destiné au traitement des eaux usées selon la présente invention présente une capacité volumique de rétention d'eau comprise entre 5% et 35%, plus préférentiellement comprise entre 7% et 25%, de manière avantageuse comprise entre 10% et 20% en volume d'eau calculée par rapport au volume d'un lit de matière sèche formé du matériau filtrant. Une capacité volumique de rétention d'eau dans cette plage de valeur permet d'avoir (i) une conservation suffisante d'humidité pour maintenir le biofilm bactérien, et (ii) une dégradation lente du matériau filtrant car la capacité volumique de rétention d'eau est suffisamment faible pour ralentir la putréfaction ou la dégradation du matériau filtrant.

De manière favorable, le matériau filtrant destiné au traitement des eaux usées selon la présente invention présente une densité apparente comprise entre 0,1 et 0,3 g/cm³.

De manière préférée, le matériau filtrant destiné au traitement des eaux usées selon la présente invention présente en forme de lit filtrant une capacité en air comprise entre 20 et 50%, préférentiellement entre 30 et 5%, plus préférentiellement entre 30% et 40% en volume d'air calculée par rapport au volume d'un lit de matière sèche formé du matériau filtrant. Cette plage de valeur pour la capacité en air permet au matériau filtrant d'être suffisamment aéré, ce qui favorise une croissance optimale du biofilm bactérien.

Avantageusement, dans le matériau filtrant destiné au traitement des eaux usées selon la présente invention, lesdits morceaux de bois torréfié sont choisis dans le groupe des morceaux de bois de hêtre, du bois de pin, du bois de peuplier, du bois de frêne, du bois d'acacia, du bois d'eucalyptus, du bois de résineux, et leurs combinaisons. En effet, les morceaux de bois torréfié peuvent être réalisés à partir de différents types de bois en fonction de la disponibilité des déchets de bois, par exemple déchets de scierie, dans le territoire dans lequel le matériau filtrant selon la présente invention est utilisé.

Préférentiellement, le matériau filtrant destiné au traitement des eaux usées selon la présente invention présente en forme de lit filtrant de matières sèches un volume initial et une résistance à la dégradation lorsqu'il forme un lit de matériau filtrant mesurée par un pourcentage de tassement moyen inférieur à 5%, préférentiellement inférieur à 4%, plus préférentiellement inférieur à 3%, encore plus préférentiellement inférieur à 2%, de manière favorable inférieur à 1% par rapport au volume initial. En effet, le pourcentage de tassement moyen est calculé par un rapport entre la différence entre le volume initial occupé par un lit de matière sèche formé du matériau filtrant et le volume occupé par le lit de matière sèche formé du matériau filtrant après 56 jours au minimum et le volume initial du lit de matière sèche formé du matériau filtrant. En effet, un pourcentage de tassement moyen très faible assure une bonne conservation du matériau filtrant sans risque de colmatage et/ou sans réduction des performances épuratoires du matériau filtrant.

De manière avantageuse, le matériau filtrant destiné au traitement des eaux usées selon la présente invention présente une teneur en matières hydrosolubles comprise entre 1 et 6%, préférentiellement entre 2 et 4% en poids par rapport au poids de matériau filtrant. En effet, un tel pourcentage en matières hydrosolubles du matériau filtrant permet une bonne conservation du matériau filtrant et assure que des composés du matériau filtrant qui pourraient éventuellement être source de pollution ne soient pas relargués avec des eaux filtrées.

Avantageusement, le matériau filtrant destiné au traitement des eaux usées selon la présente invention comprend une teneur en morceaux de bois torréfié comprise entre 35 et 100%, plus préférentiellement comprise entre 45% et 100%, entre 60% et 100%, entre 70% et 100%, entre 80% et 100% en poids par rapport au poids de matériau filtrant. En effet, un matériau filtrant comprenant des morceaux de bois torréfié et un ou plusieurs autres types de composés peut s'avérer avantageux en fonction des disponibilités des différents types de composés, et ce de manière à utiliser, en fonction du territoire donné, des composés disponibles localement pour former le matériau filtrant, ce qui réduit les coûts de transport.

Préférentiellement, le matériau filtrant destiné au traitement des eaux usées selon la présente invention forme un lit filtrant comprenant une ou plusieurs couches dudit matériau filtrant superposées sur une hauteur prédéterminée, dans lequel ladite une ou lesdites plusieurs couches comprennent ladite première population de morceaux et/ou ladite deuxième population de morceaux.

D'autres formes de réalisation du matériau filtrant destiné au traitement des eaux usées selon la présente invention sont indiquées dans les revendications annexées.

La présente invention se rapporte aussi à une cuve d'épuration destinée au traitement des eaux usées.

Avantageusement, la cuve d'épuration destinée au traitement des eaux usées comprend :
- une enceinte de décantation des eaux usées agencées pour permettre aux matières solides en suspension de sédimenter dans une zone inférieure de l'enceinte de décantation, et comprenant au moins une entrée d'eaux usées et au moins une sortie d'eaux clarifiées,
- une enceinte de filtration comprenant au moins une entrée d'eaux clarifiées, en communication fluidique avec ladite au moins une sortie d'eaux clarifiées de ladite enceinte de décantation, et au moins une sortie d'eaux filtrées, entre lesquelles s'étend un lit filtrant comprenant le matériau filtrant selon l'invention, ledit lit de matériau filtrant présentant une face amont et une face aval selon une direction fluidique de filtration.

Au sens de la présente invention, le terme « eaux clarifiées » désigne des eaux usées au moins partiellement déplétée en matières solides en suspension.

Au sens de la présente invention, le terme « direction fluidique de filtration » désigne une direction moyenne des eaux au travers du lit de matériau filtrant entre ladite au moins une entrée d'eaux clarifiées et ladite au moins une sortie d'eaux filtrées. Cette direction moyenne représente une résultante des vecteurs de déplacement des eaux, ces vecteurs de déplacement des eaux au travers du lit de matériau filtrant peuvent être verticaux, horizontaux ou obliques selon différentes positions d'entrée des eaux clarifiées et des positions de sorties des eaux filtrées.

Une cuve d'épuration comprenant une enceinte de décantation en amont et une enceinte de filtration en aval permet de réduire la charge en matières organiques et en matières solides en suspension des eaux usées tout en évitant un colmatage du matériau filtrant.

De manière avantageuse, dans la cuve d'épuration destinée au traitement des eaux usées, l'enceinte de décantation permet également une dégradation de matières organiques à l'aide du métabolisme de bactéries anaérobies.

Préférentiellement, dans la cuve d'épuration destinée au traitement des eaux usées, ladite au moins une entrée d'eaux clarifiées de l'enceinte de filtration est localisée dans une zone supérieure de ladite enceinte de filtration et ladite au moins une sortie d'eaux filtrées est localisée dans une zone inférieure de ladite enceinte de filtration. En effet, il est avantageux que la pesanteur soit un champ de force principal pour définir la direction fluidique de filtration.

De manière préférée, dans la cuve d'épuration destinée au traitement des eaux usées, la communication fluidique entre ladite enceinte de filtration et ladite enceinte de décantation est réalisée au travers d'un distributeur d'eaux clarifiées qui comprend une pluralité de sorties d'eaux clarifiées, les sorties d'eaux clarifiées répartissant lesdites eaux clarifiées en une pluralité de positions à la face amont du lit filtrant. En effet, une bonne répartition des eaux clarifiées en amont du lit filtrant permettra d'utiliser un maximum de surface de filtration du lit filtrant, ce qui augmentera les performances épuratoires du lit filtrant.

Avantageusement, la cuve d'épuration destinée au traitement des eaux usées comprend un moyen de répartition des eaux clarifiées, localisé en aval dudit distributeur, et comprenant un auget basculant. En effet, la présence d'un auget basculant favorisera d'autant plus une bonne répartition des eaux clarifiées sur le lit filtrant.

Préférentiellement, la cuve d'épuration destinée au traitement des eaux usées comprend au moins une tubulure d'alimentation d'un gaz contenant de l'oxygène agencée pour fournir de l'oxygène dans l'enceinte de filtration pour permettre une digestion aérobie par une population bactérienne répartie sur le matériau filtrant.

De manière avantageuse, dans la cuve d'épuration destinée au traitement des eaux usées, ladite enceinte de décantation et ladite enceinte de filtration possèdent des parois réalisées dans un matériau inerte par rapport à la corrosion.

Avantageusement, dans la cuve d'épuration destinée au traitement des eaux usées, le lit de matériau filtrant présente une surface de filtration comprise entre 1 m² et 15 m², plus préférentiellement entre 2 m² et 10 m² et possède une hauteur de lit de filtration préférentiellement comprise entre 60 cm et 1 m, plus préférentiellement entre 80 cm et 95 cm, de manière préférée de 90 cm. En effet, une telle surface de filtration combinée à une telle hauteur de filtration permet une filtration d'un volume d'eaux usées correspondant à une utilisation domestique courante.

De manière préférée, dans la cuve d'épuration destinée au traitement des eaux usées, le lit filtrant comprend préférentiellement un matériau filtrant homogène mais ledit lit filtrant peut aussi comprendre au moins un matériau filtrant additionnel choisi dans le groupe du Xylit, des coques concassés de fruits à coque, du bois pyrolysé, du bois brut, et des fibres végétales, ledit matériau filtrant et ledit matériau filtrant additionnel étant agencés en mélange ou en couches superposées selon la direction fluidique de filtration.

D'autres formes de réalisation de la cuve d'épuration destinée au traitement des eaux usées selon la présente invention sont indiquées dans les revendications annexées.

La présente invention se rapporte aussi à un procédé d'épuration d'eaux usées dans une cuve d'épuration.

Le procédé d'épuration d'eaux usées dans une cuve d'épuration selon la présente invention comprend une zone de décantation et une zone de filtration comprenant un lit filtrant de matériau filtrant selon la présente invention, ledit lit filtrant présentant une face amont de lit filtrant et une face aval de lit filtrant selon une direction fluidique de filtration, ledit procédé comprenant les étapes de :
- une admission d'eaux usées dans la zone de décantation,
- une décantation des matières solides en suspension dans la zone de décantation formant un lit de matières solides décantées et une phase liquide clarifiée,
- un transfert de la phase liquide clarifiée vers la zone de filtration,
- une répartition de la phase liquide clarifiée en une pluralité de positions à la face amont du lit filtrant,
- une filtration de la phase liquide clarifiée au travers du lit filtrant selon la direction fluidique de filtration avec une obtention d'eaux filtrées, et
- une évacuation des eaux filtrées par au moins une sortie d'eaux filtrées.

Avantageusement, dans le procédé d'épuration d'eaux usées dans une cuve d'épuration, les eaux usées présentent une teneur initiale en ion nitrate et les eaux filtrées présentent une teneur en ion nitrate au moins 2 fois supérieure, préférentiellement au moins 3 fois supérieure, de manière favorable au moins 5 fois supérieure à la teneur initiale en ion nitrate des eaux usées.

De manière favorable, dans le procédé d'épuration d'eaux usées dans une cuve d'épuration, les eaux filtrées présentent une demande biochimique en oxygène, DBOs, inférieure ou égale à 35 mgO₂.I⁻¹, préférentiellement inférieure ou égale à 30 mgO₂.I⁻¹,de manière favorable inférieure ou égale à 20 mgO₂.I⁻¹.

Préférentiellement, dans le procédé d'épuration d'eaux usées dans une cuve d'épuration, les eaux usées présentent une teneur initiale en ion ammonium et les eaux filtrées présentent une teneur en ion ammonium diminuée d'au moins 50%, préférentiellement au moins 60%, de manière favorable au moins 70% par rapport à la teneur initiale en ion ammonium des eaux usées.

D'autres caractéristiques, détails et avantages de l'invention ressortiront de la description donnée ci-après, à titre non limitatif et en faisant référence aux dessins annexés.
La figure 1 montre une photographie de morceaux de bois torréfié comme matériau filtrant selon la présente invention.
La figure 2 est une représentation schématique en coupe de plusieurs lits filtrants comprenant des morceaux de bois torréfié.
La figure 3 est une représentation schématique en coupe d'une cuve d'épuration selon la présente invention.
La figure 4 montre les capacités de rétention volumique d'eau d'un lit filtrant formé de différents matériaux filtrants.
La figure 5 montre le tassement hydraulique moyen d'un lit filtrant selon la présente invention en comparaison du tassement hydraulique moyen d'un lit filtrant d'écorces de pin.
La figure 6 montre la teneur de matières hydrosolubles de matériaux filtrants selon la présente invention en comparaison de différents matériaux filtrants comparatifs.
La figure 7 montre une évolution temporelle de la concentration en nitrate des eaux filtrées par un lit filtrant de matériaux filtrants selon la présente invention en comparaison de lits filtrants de différents matériaux filtrants comparatifs.

Sur les figures, les éléments identiques ou analogues portent les mêmes références.

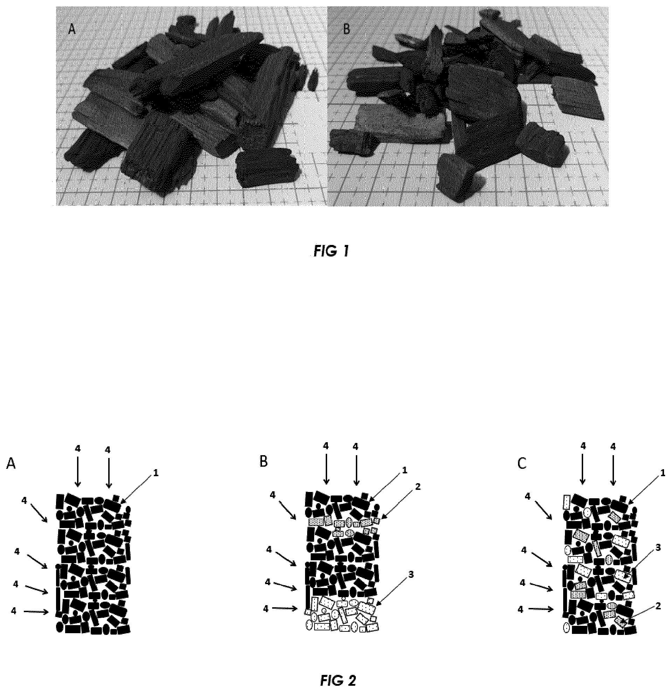

La figure 1 montre des morceaux de bois torréfié obtenus par un processus de torréfaction tel que décrit dans le document US10526543, et provenant de Saniflor A ou provenant de LMK Energy B. Pour former les morceaux de bois torréfié, du bois brut est d'abord concassé et découpé. Ce bois brut concassé est ensuite préalablement séché à moins de 15% d'humidité avant de subir le processus de torréfaction.

Le bois torréfié concassé est ensuite classifié en fonction de sa taille par exemple par un tamisage pour retenir des morceaux de bois torréfié présentant une granulométrie comprise entre 3 mm et 25 mm.

Avantageusement, ce bois brut est choisi parmi un groupe des morceaux de bois de hêtre, du bois de pin, du bois de peuplier, du bois de frêne, du bois d'acacia, du bois d'eucalyptus, du bois de résineux, et leurs combinaisons.

La figure 2 illustre une coupe d'un lit filtrant comprenant un matériau filtrant. Le lit filtrant comprend par exemple des morceaux en vrac dont la granulométrie est variable. Avantageusement, une disposition en vrac, aléatoire des morceaux, crée une pluralité d'espaces interstitiels, ce qui favorise un développement d'un biofilm bactérien et un écoulement des eaux clarifiées au travers du lit filtrant. La figure 2A illustre une coupe d'un lit filtrant composé uniquement de morceaux de bois torréfié 1. La figure 2B illustre une coupe d'un lit filtrant comprenant, en partant du haut vers le bas :
- une première couche de morceaux de bois torréfié 1,
- une deuxième couche comprenant des morceaux d'un deuxième matériau filtrant 2,
- une troisième couche de morceaux de bois torréfié, et
- une quatrième couche comprenant des morceaux d'un troisième matériau filtrant 3.

Avantageusement, selon la présente invention, les morceaux de bois torréfié sont des plaquettes de bois torréfié.

La figure 2C illustre une coupe d'un lit filtrant comprenant des morceaux de bois torréfié 1, des morceaux d'un deuxième matériau filtrant 2 et des morceaux d'un troisième matériau filtrant qui sont répartis de manière aléatoire sur la hauteur et/ou la largeur et/ou la longueur dudit lit filtrant. Avantageusement, le lit filtrant comprend un matériau filtrant homogène mais il peut en outre comprendre au moins un matériau filtrant additionnel, comme par exemple illustré à la figure 2B et 2C par le deuxième matériau filtrant et le troisième matériau filtrant, choisi dans le groupe du Xylit, des coques concassés de fruits à coque, du bois pyrolysé, du bois brut, et des fibres végétales, ledit matériau filtrant et ledit matériau filtrant additionnel étant agencés en mélange ou en couches superposées selon la direction fluidique de filtration.

Comme illustré à la figure 2, le matériau filtrant comprend une population de morceaux. Avantageusement, ladite population de morceaux comprend une première population de morceaux présentant une distribution de tailles de particules comprise entre 3 mm et 10 mm et une deuxième population de morceaux présentant une distribution de tailles de particules supérieure à 10 mm et inférieure ou égale à 25 mm, ledit matériau filtrant présente une masse de la première population supérieure à celle de la deuxième population.

Les flèches 4 à la figure 2 illustre les vecteurs de déplacement des eaux au travers du matériau filtrant. Comme illustré, ces vecteurs de déplacement 4 des eaux au travers du matériau filtrant peuvent être verticaux, horizontaux ou obliques selon différentes positions d'entrée des eaux clarifiées et des positions de sorties des eaux filtrées. La direction fluidique de filtration est la somme de ces différents vecteurs de déplacement des eaux au travers du matériau filtrant. Avantageusement, cette direction fluidique est substantiellement orientée du haut du lit filtrant vers le bas du lit filtrant en fonction de la force de pesanteur.

Le matériau filtrant selon la présente invention possède certaines propriétés chimiques et physiques. En effet, le matériau filtrant possède avantageusement une capacité volumique de rétention d'eau comprise entre 7% et 25% en volume d'eau calculée par rapport au volume d'un lit de matière sèche formé du matériau filtrant. Le matériau filtrant possède aussi préférentiellement une densité apparente de lit de matière sèche comprise entre 0,1 et 0,3 g/cm³. Le matériau filtrant en forme de lit filtrant est également défini de manière avantageuse par une capacité d'air comprise entre 30 et 40% en volume d'air calculée par rapport au volume d'un lit de matière sèche formé du matériau filtrant. Le matériau filtrant suivant la présente invention possède également de manière préférée une résistance à la dégradation lorsqu'il forme un lit de matériau filtrant mesurée par un pourcentage de tassement moyen inférieur à 1 % parrapport au volume initial d'un lit de matière sèche formé du matériau filtrant. Le matériau filtrant présente également de manière avantageuse une teneur en matières hydrosolubles comprise entre 2 et 4% en poids par rapport au poids de matériau filtrant. De manière préférée, le matériau filtrant suivant la présente invention comprend une teneur en morceaux de bois torréfié comprise entre 35 et 100%, plus préférentiellement entre 60% et 100%, en poids par rapport au poids de matériau filtrant.

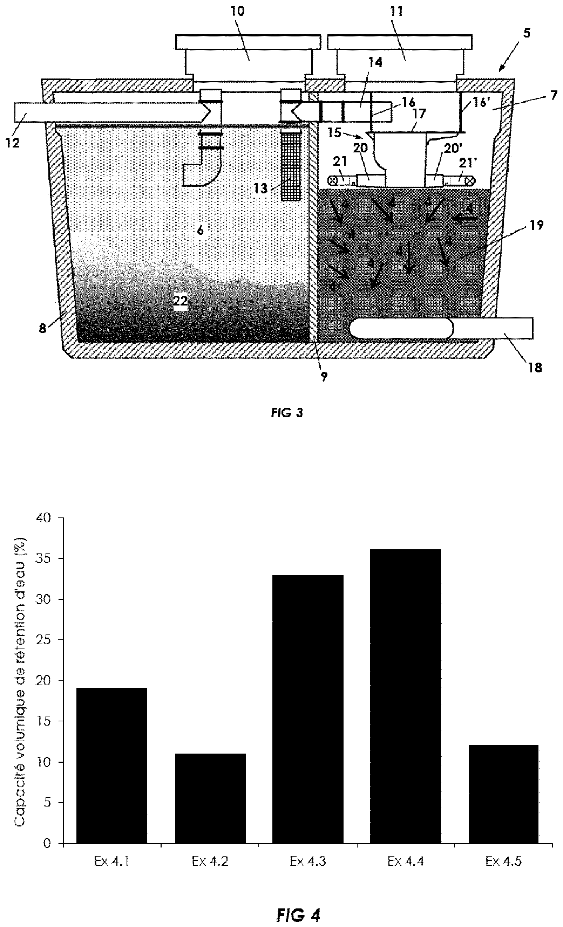

La figure 3 illustre une vue en coupe de la cuve d'épuration 5 destinée au traitement des eaux usées selon la présente invention. Cette cuve d'épuration 5 comprend une enceinte de décantation 6 et une enceinte de filtration 7 possédant des parois 8 réalisées dans un matériau inerte par rapport à la corrosion comme par exemple du béton, ou un polymère comme du polyéthylène ou du polypropylène. L'enceinte de décantation 6 et l'enceinte de filtration 7 sont séparées par une paroi 9. La cuve d'épuration 5 est en outre munie d'un premier système d'ouverture 10 permettant l'accès à l'enceinte de décantation 6 et d'un deuxième système d'ouverture 11 permettant l'accès à l'enceinte de filtration 7. L'enceinte de décantation 6 comprend une entrée d'eaux usées 12 et une sortie des eaux clarifiées au travers d'un filtre 13. Un tuyau 14 est relié au filtre 13 assurant une communication fluidique entre l'enceinte de décantation 6 et l'enceinte de filtration 7. L'enceinte de filtration 7 comprend un distributeur 15 relié au tuyau 14. Avantageusement, le distributeur 15 est accroché à une paroi supérieure de l'enceinte de filtration 7 à l'aide d'attaches 16 et 16'. Le distributeur 15 possède en outre une entrée des eaux clarifiées 17. L'enceinte de filtration 7 possède également une sortie d'eaux filtrées 18, entre lesquelles s'étend un lit filtrant 19 comprenant le matériau filtrant selon la présente invention. L'enceinte de filtration 7 comprend également un moyen de répartition des eaux clarifiées, localisé en aval du distributeur 15 et comprenant un auget basculant (non représenté à la figure 3). Ledit moyen de répartition comprend une pluralité d'orifices de sortie 20, 20' qui aboutissent dans des conduites 21, 21' pour être déversées sur le lit filtrant 19.

Les eaux usées entrent dans l'enceinte de décantation 6 via l'entrée d'eaux usées 12. L'enceinte de décantation 6 est agencée pour permettre aux matières solides en suspension de sédimenter dans une zone inférieure 22 de l'enceinte de décantation 6. La phase liquide clarifiée, les eaux clarifiées, sort de l'enceinte de décantation 6 au travers du filtre 13 et arrive ensuite dans le distributeur 15 par le tuyau 14 surmontant le distributeur 15. Le tuyau 14 permet l'entrée d'eaux clarifiées dans la cuve de filtration 7. L'enceinte de filtration 7 comprenant ledit lit de matériau filtrant 19 présente une face amont et une face aval selon une direction fluidique de filtration. La direction fluidique de filtration est la somme des vecteurs de déplacement 4 des eaux au travers du matériau filtrant. Ces vecteurs de déplacement 4 sont également représentés à la figure 2. Avantageusement, l'entrée d'eaux clarifiées par le tuyau 14 dans l'enceinte de filtration est localisée dans une zone supérieure de ladite enceinte de filtration 7 et ladite sortie d'eaux filtrées 18 est localisée dans une zone inférieure de ladite enceinte de filtration 7. Avantageusement, la communication fluidique entre ladite enceinte de filtration 7 et ladite enceinte de décantation 6 est réalisée au travers d'un distributeur d'eaux clarifiées 15 qui comprend une pluralité de sorties d'eaux clarifiées 20, 20' et 21, 21', les sorties d'eaux clarifiées répartissant lesdites eaux clarifiées en une pluralité de positions à la face amont du lit filtrant. Lesdites eaux clarifiées passent au travers du lit filtrant 19 selon la direction fluidique de filtration pour donner des eaux filtrées. Les eaux filtrées sont ensuite évacuées par la sortie d'eaux filtrées 18. Préférentiellement, la cuve d'épuration 5 comprend également au moins une tubulure d'alimentation d'un gaz (non représentée à la figure 3) contenant de l'oxygène agencée pour fournir de l'oxygène dans l'enceinte de filtration 7 pour permettre une digestion aérobie par une population bactérienne répartie sur le lit de matériau filtrant 19. De manière avantageuse, le lit de matériau filtrant 19 présente une surface de filtration comprise entre 2 m² et 10 m².

Avantageusement, lesdites matières solides en suspension qui ont sédimentées dans la zone inférieure 22 de l'enceinte de décantation 6 sont évacuées de l'enceinte de décantation 6 de manière prédéterminée à intervalle régulier.

Avantageusement, les eaux usées présentent une teneur initiale en ion nitrate et les eaux filtrées présentent une teneur en ion nitrate au moins 5 fois supérieure à la teneur initiale en ion nitrate des eaux usées.

De manière préférée, les eaux filtrées présentent une demande biochimique en oxygène, DBOs, inférieure ou égale à 20 mgO₂.I⁻¹.

Préférentiellement, les eaux usées présentent une teneur initiale en ion ammonium et les eaux filtrées présentent une teneur en ion ammonium diminuée d'au moins 70% par rapport à la teneur initiale en ion ammonium des eaux usées.

### Exemples.-

### Exemple 1.- Température et durée de torréfaction du bois pour obtenir des morceaux de bois torréfié selon la présente invention

Le bois brut provenant de déchets de scierie est préalablement découpé avant séchage en morceaux ayant une granulométrie allant de 3 mm à 10 cm. Ce bois découpé est ensuite séché à une température de 80°C dans une atmosphère réductrice pour obtenir un bois découpé séché ayant une humidité inférieure ou égale à 15%.

Après séchage, le bois est torréfié à une température augmentant progressivement jusqu'à 240°C pendant 60 minutes dans une atmosphère réductrice.

Les morceaux de bois torréfié sont ensuite tamisés à l'aide d'un tamis permettant de récolter des morceaux ayant une granulométrie comprise entre 3 mm et 25 mm. Ces morceaux de bois torréfié sont séparés en une première population de morceaux ayant une granulométrie comprise entre 3 mm et 10 mm et une deuxième population de morceaux ayant une granulométrie supérieure à 10 mm et inférieure ou égale à 25 mm.

### Exemple 2.- Préparation d'un lit filtrant comprenant des morceaux de bois torréfié selon la présente invention

Un lit filtrant comprenant les morceaux de bois torréfié obtenus à l'exemple 1 est placé dans l'enceinte de filtration. Ce lit filtrant possède un diamètre de 200 mm et une hauteur de lit de 480 mm. Ce lit filtrant comprend 3,15 kg de matières sèches de morceaux de bois torréfié dont 70 % en masse correspond à la première population de morceaux et 30 % en masse correspond à la deuxième population de morceaux. La première et la deuxième population de morceaux sont mélangées en vrac dans tout le volume constituant le lit filtrant.

### Exemple 3.- Capacité épuratoire en pilote de test

Un pilote de test selon la présente invention ayant un volume de 15 dm³ et un lit filtrant selon l'exemple 2, possède une capacité de traitement des eaux usées définie par une charge organique journalière nominale de 150 l.j⁻¹.EH⁻¹ et un débit hydraulique journalier nominal de 3,6 l (litre) par jour (l.j⁻¹). Le terme « EH » signifie « équivalent habitant». Ce pilote de test permet d'obtenir des eaux filtrées en sortie de l'enceinte de filtration ayant une charge organique journalière nominale inférieure ou égale à 35 mg/l et une teneur en matières solides en suspension inférieure ou égale à 30 mg/l.

### Exemple 4.- Comparaison des capacités de rétention volumique d'eau du lit filtrant formé de différents matériaux filtrants

On a comparé les capacités volumiques de rétention d'eau des matériaux indiqués dans le tableau 1 en appliquant 23 I d'eau pour 23 dm³ de matériau filtrant sous forme d'un lit de 2,875 dm² sur une hauteur de 0,8 m. On a testé des matériaux filtrants composés de morceaux de bois torréfié provenant de Saniflor (Exemple 4.1), de morceaux de bois torréfié provenant de LMK Energy (Exemple 4.2), de coir de coco (Exemple 4.3), d'écorces de pin (Exemple 4.4) et de coques de noisettes (Exemple 4.5).

**Tableau 1.-**

| **Numérotation** | **Types d'exemple** | **Matériau filtrant** | **Granulométrie moyenne** | **Densité du matériau filtrant** |
|---|---|---|---|---|
| Exemple 4.1 | Selon l'invention | Morceaux de bois torréfié (Saniflor) | 6,5 mm | 196 kg/m³ |
| Exemple 4.2 | Selon l'invention | Morceaux de bois torréfié (LMK Energy) | 6,5 mm | 196 kg/m³ |
| Exemple 4.3 | Exemple comparatif | Coir de coco | 4 mm | 94 kg/m3 |
| Exemple 4.4 | Exemple comparatif | Ecorces de pin | 3 mm | 169 kg/m³ |
| Exemple 4.5 | Exemple comparatif | Coques de noisettes | 10 mm | 225 kg/m³ |

Pour déterminer la capacité volumique de rétention d'eau, on a immergé un lit filtrant dans un volume d'eau prédéterminé pendant 24h. Le lit filtrant est ensuite égoutté jusqu'à ce que de l'eau ne s'écoule plus du lit filtrant (masse d'eau stable dans un bac de récupération sur balance). On a ensuite récupéré un volume déterminé de matériau de filtration (inférieur à 5 dm³) gorgé d'eau qu'on a ensuite placé dans une étuve à 110°C pendant 12h. La quantité d'eau retenue par le matériau de filtration est obtenue par soustraction de la masse de matériau après séchage à l'étuve (110°C, 12h) de la masse initiale de matériau gorgé d'eau (après égouttage) et porté par unité de volume de matériau de filtration.

Les capacités de rétention volumique d'eau du lit filtrant sont calculées comme étant la différence entre la masse humide de l'échantillon et la masse sèche de l'échantillon divisé par le volume de l'échantillon. Dans certains cas, il pourra être avantageux d'échantillonner à différents endroits de la colonne et de procéder à une moyenne.

La figure 4 illustre la capacité volumique de rétention d'eau d'un lit filtrant constitué de morceaux de bois torréfié provenant de Saniflor (Ex 4.1) ou de LMK Energy (Ex 4.2), de coir de coco (Ex 4.3), d'écorces de pin (Ex 4.4), de coques de noisettes (Ex 4.5). La figure 4 montre la capacité volumique de rétention d'eau du lit filtrant à une hauteur prédéterminée du lit filtrant. Les matériaux filtrants utilisés dans les exemples 4.1, 4.2 et 4.5 montrent une capacité volumique de rétention d'eau plus faible que les matériaux filtrants utilisés dans les exemples 4.3 et 4.4. Il est important d'avoir une capacité volumique de rétention d'eau supérieure à 5% pour permettre une bonne croissance du biofilm bactérien mais inférieure à 25% pour éviter une dégradation trop rapide du matériau filtrant. Un lit filtrant constitué de coir de coco (Ex 4.3) et d'écorces de pin (Ex 4.4) montre une capacité de rétention volumique d'eau trop élevée comparée aux morceaux de bois torréfié (Ex 4.1 et 4.2) et aux coques de noisettes (Ex 4.5). Chaque barre noire à la figure 4 représente une moyenne sur 3 mesures expérimentales.

### Exemple 5.- Comparaison du tassement hydraulique du lit filtrant formé de différents matériaux filtrants

On a comparé le tassement hydraulique de matériaux indiqués dans le tableau 2 en déversant 11,5 l d'eau sur un lit filtrant de 23 I en moins de 5 minutes. On a testé des matériaux filtrants composés de morceaux de bois torréfié provenant de Saniflor (Exemple 4.1) et des écorces de pin (Exemple 4.4). Le tassement hydraulique est mesuré en comparant la hauteur du lit filtrant après déversement d'eau par rapport à la hauteur du lit filtrant de matières sèches avant déversement d'eau.

**Tableau 2.-**

| **Numérotation** | **Types d'exemple** | **Matériau filtrant** |
|---|---|---|
| Exemple 4.1 | Selon l'invention | Morceaux de bois torréfié (Saniflor) |
| Exemple 4.4 | Exemple comparatif | Ecorces de pin |

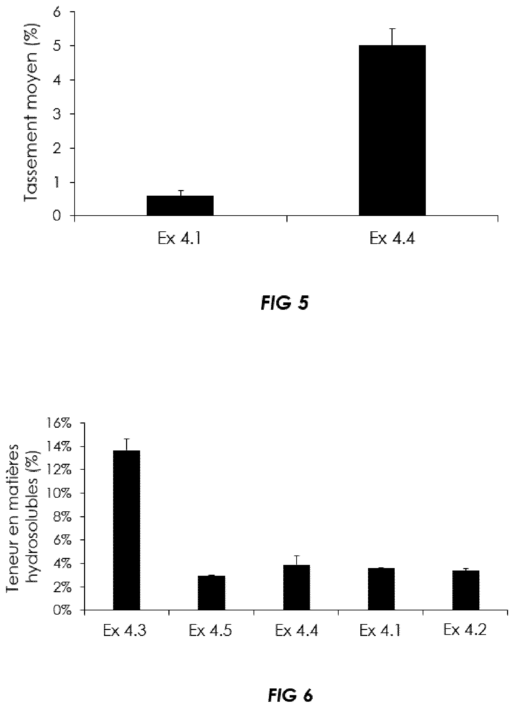

La figure 5 illustre le pourcentage de tassement hydraulique pour le matériau filtrant de l'exemple 4.1 et de l'exemple 4.4. Comme illustré à la figure 5, un lit filtrant constitué d'écorce de pin (Ex 4.4) est plus sensible au tassement qu'un lit filtrant composé de morceaux de bois torréfié (Ex 4.1). Les morceaux de bois torréfié sont particulièrement résistants au tassement hydraulique car ils possèdent une grande dureté suite à leur torréfaction. De plus, ces morceaux de bois torréfié étant avantageusement des plaquettes de bois torréfié ont une forme rectangulaire, courtes dont l'agencement est peu susceptible de varier. La figure 5 montre pour les exemples 4.1 et 4.2 une moyenne du pourcentage de tassement hydraulique de 3 mesures expérimentales et un écart-type correspondant à chaque moyenne.

### Exemple 6.- Comparaison de la teneur en matières hydrosolubles de différents matériaux filtrants

On a comparé la teneur en matières hydrosolubles de différents matériaux filtrants indiqués dans le tableau 1. Pour déterminer la teneur en matières hydrosolubles d'un matériau filtrant, on a utilisé la technique de Van Soest pour la détermination des constituants pariétaux de végétaux à l'analyse des produits de compostage et litières diverses à usage agronomique en utilisant un solvant aqueux (http://ep.antares.free.fr/site/htmi/cours4/cours4-3/resources/Methode%20-%20Technique%20Van%20Soest%20manuelle%20et%20Fibertec.pdf et Van Soest P.J. et Wine R.H., « Determination of lignin and cellulose in acid-detergent liber with permanganate ». J. Assoc. Off. Anal. Chem. 1968, 51 : 780-785).

La figure 6 montre la teneur de matières hydrosolubles de différents matériaux filtrants comme indiqué au Tableau 1. Comme le montre la figure 6, les morceaux de bois torréfié (Ex 4.1 et 4.2) possèdent un pourcentage de matières hydrosolubles de 3 à 3,5%, ce qui est relativement faible et permet une bonne conservation du matériau filtrant. En comparaison, un matériau filtrant constitué de coir de coco (Ex 4.3) présente un pourcentage de matières hydrosolubles de 13%, ce qui est trop élevé et néfaste pour une conservation adéquate du matériau filtrant. La figure 6 montre pour chaque exemple une moyenne de la teneur en matières hydrosolubles de 3 mesures expérimentales et un écart-type correspondant à chaque moyenne.

### Exemple 7.- Evolution temporelle de la production de nitrates par la biomasse aérobie contenue dans le lit filtrant formé de différents matériaux filtrants

On a comparé l'évolution temporelle de la teneur en nitrates d'eaux filtrées par différents matériaux filtrants indiqués dans le tableau 3. Pour ce faire, la teneur en nitrates des eaux filtrées est mesurée par une méthode photométrique (DMP 1.0-50.0 mg/l NO₃-N) une fois par semaine.

**Tableau 3.-**

| **Numérotation** | **Types d'exemple** | **Matériau filtrant** |
|---|---|---|
| Exemple 4.1 | Selon l'invention | Morceaux de bois torréfié (Saniflor) |
| Exemple 4.2 | Selon l'invention | Morceaux de bois torréfié (LMK Energy) |
| Exemple 4.3 | Exemple comparatif | Coir de coco |
| Exemple 4.4 | Exemple comparatif | Ecorces de pin |

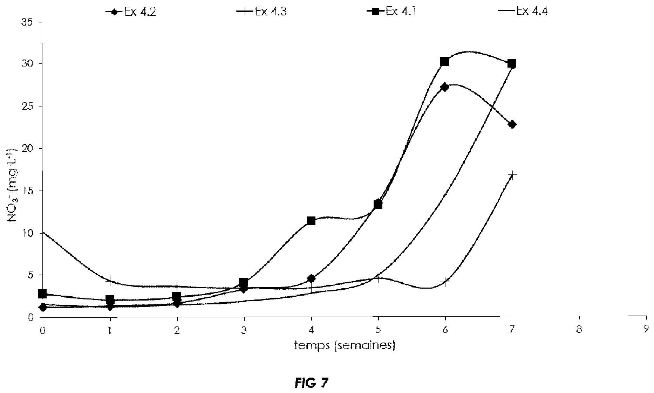

Comme le montre la figure 7, un lit filtrant constitué de morceaux de bois torréfié (Ex 4.1 et 4.2) permet d'obtenir des eaux filtrées avec une concentration accrue en nitrates au bout de 5 semaines de traitement par rapport au lit filtrant constitué de coir de coco (Ex 4.3) ou d'écorces de pin (Ex 4.4). La production d'ions nitrates (NO_{3⁻}) ou nitrification est la résultante de la dégradation des ions ammonium. Elle est assurée par des bactéries aérobie qui interviennent en toute fin de cycle. Aussi, la présence de nitrification est un indice d'une bonne santé biologique du filtre et d'une dégradation efficace de l'azote. La figure 7 montre pour chaque exemple, et à chaque semaine, une moyenne de la teneur en ions nitrates de 3 mesures expérimentales et un écart-type correspondant à chaque moyenne.

Il est bien entendu que la présente invention n'est en aucune façon limitée aux formes de réalisations décrites ci-dessus et que bien des modifications peuvent y être apportées sans sortir du cadre des revendications annexées.

Par exemple, le matériau filtrant destiné au traitement des eaux usées selon la présente invention forme un lit filtrant comprenant (i) un mélange de différents matériaux filtrants ou (ii) une pluralité de couches de matériaux filtrants formée d'une première, deuxième, et éventuellement troisième, quatrième et cinquième couches selon le sens d'écoulement de l'eau (direction fluidique de filtration). Plus particulièrement, le lit filtrant est caractérisé par une superposition de couches de matériau filtrant dans lequel les eaux à filtrer passent d'abord au travers de la première couche, puis de la deuxième couche, et éventuellement de la troisième, quatrième et cinquième couche. De manière préférée, la première couche est composée d'un premier matériau filtrant, la deuxième couche est composée d'un deuxième matériau filtrant, et éventuellement, la troisième, quatrième et cinquième couche est composée d'un troisième, quatrième et cinquième matériau filtrant. Le premier, deuxième, et éventuellement troisième, quatrième et cinquième matériau filtrant sont tous identiques ou tous différents. Avantageusement, au moins une couche du lit filtrant est constituée d'un matériau filtrant différent par rapport au matériau filtrant des autres couches du lit filtrant.

Alternativement, le matériau filtrant destiné au traitement des eaux usées selon la présente invention est intégré dans un lit filtrant comprenant au moins une couche de morceaux de bois stabilisés thermiquement par un premier traitement thermique comprise entre 60% et 100%, préférentiellement comprise entre 65% et 100%, entre 70% et 100%, entre 75% et 100%, avantageusement entre 80% et 100% en poids par rapport au poids du lit filtrant et au moins une couche de morceaux de bois stabilisés thermiquement par un second traitement thermique. De manière avantageuse, le premier traitement thermique et le second traitement thermique sont différents. De manière avantageuse, les morceaux de bois destinés à être stabilisés thermiquement par un premier traitement thermique sont identiques au morceaux de bois destinés à être stabilisés thermiquement par un second traitement thermique. De manière préférée, le premier traitement thermique est une torréfaction.

## Revendications

1. Matériau filtrant végétal destiné au traitement des eaux usées comprenant de la cellulose et de la lignine, ledit matériau filtrant végétal étant **caractérisé en ce qu'**il comprend des morceaux de bois formant une population de morceaux, ladite population de morceaux présentant une distribution de tailles de particules comprise entre 3 mm et 25 mm et lesdits morceaux de bois étant des morceaux de bois torréfié.

2. Matériau filtrant selon la revendication 1, dans lequel ladite population de morceaux comprend une première population de morceaux présentant une distribution de tailles de particules comprise entre 3 mm et 10 mm et une deuxième population de morceaux présentant une distribution de tailles de particules supérieure à 10 mm, de préférence supérieure à 12 mm, et de préférence inférieure ou égale à 25 mm, ledit matériau filtrant présente une masse de la première population supérieure à celle de la deuxième population.

3. Matériau filtrant selon la revendication 1 ou la revendication 2, présentant une capacité volumique de rétention d'eau comprise entre 5% et 35%, plus préférentiellement comprise entre 7% et 25% en volume d'eau calculée par rapport au volume d'un lit de matière sèche formé du matériau filtrant et/ou une teneur en matières hydrosolubles comprise entre 1 et 6%, préférentiellement entre 2 et 4% en poids par rapport au poids de matériau filtrant.

4. Matériau filtrant selon l'une quelconque des revendications 1 à 3, présentant sous forme de lit filtrant une capacité en air comprise entre 20 et 50%, préférentiellement entre 30 et 40% en volume d'air calculée par rapport au volume d'un lit de matière sèche formé du matériau filtrant et/ou présentant sous forme de lit filtrant de matières sèches un volume initial et une résistance à la dégradation lorsqu'il forme un lit de matériau filtrant mesurée par un pourcentage de tassement moyen inférieur à 5%, préférentiellement inférieur à 4%, plus préférentiellement inférieur à 3%, encore plus préférentiellement inférieur à 2%, de manière favorable inférieur à 1% par rapport au volume initial.

5. Matériau filtrant selon l'une quelconque des revendications précédentes, dans lequel lesdits morceaux de bois torréfié sont choisis dans le groupe des morceaux de bois de hêtre, du bois de pin, du bois de peuplier, du bois de frêne, du bois d'acacia, du bois d'eucalyptus, du bois de résineux, et leurs combinaisons.

6. Matériau filtrant selon l'une quelconque des revendications précédentes, comprenant une teneur en morceaux de bois torréfié comprise entre 35 et 100% en poids par rapport au poids de matériau filtrant.

7. Cuve d'épuration destinée au traitement des eaux usées, ladite cuve d'épuration comprenant :
- une enceinte de décantation des eaux usées agencées pour permettre aux matières solides en suspension de sédimenter dans une zone inférieure de l'enceinte de décantation, et comprenant au moins une entrée d'eaux usées et au moins une sortie d'eaux clarifiées,
- une enceinte de filtration comprenant au moins une entrée d'eaux clarifiées, en communication fluidique avec ladite au moins une sortie d'eaux clarifiées de ladite enceinte de décantation, et au moins une sortie d'eaux filtrées, entre lesquelles s'étend un lit filtrant comprenant le matériau filtrant selon l'une quelconque des revendications précédentes, ledit lit de matériau filtrant présentant une face amont et une face aval selon une direction fluidique de filtration.

8. Cuve d'épuration selon la revendication 7, dans laquelle ladite au moins une entrée d'eaux clarifiées de l'enceinte de filtration est localisée dans une zone supérieure de ladite enceinte de filtration et ladite au moins une sortie d'eaux filtrées est localisée dans une zone inférieure de ladite enceinte de filtration, de préférence comprenant éventuellement au moins une tubulure d'alimentation d'un gaz contenant de l'oxygène agencée pour fournir de l'oxygène dans l'enceinte de filtration pour permettre une digestion aérobie par une population bactérienne répartie sur le matériau filtrant.

9. Cuve d'épuration selon la revendication 7 ou la revendication 8, dans laquelle la communication fluidique entre ladite enceinte de filtration et ladite enceinte de décantation est réalisée au travers d'un distributeur d'eaux clarifiées qui comprend une pluralité de sorties d'eaux clarifiées, les sorties d'eaux clarifiées répartissant lesdites eaux clarifiées en une pluralité de positions à la face amont du lit filtrant, de préférence comprenant un moyen de répartition des eaux clarifiées, localisé en aval dudit distributeur, et comprenant un auget basculant.

10. Cuve d'épuration selon l'une quelconque des revendications 7 à 9, dans laquelle le lit de matériau filtrant présente une surface de filtration comprise entre 1 m² et 15 m², plus préférentiellement entre 2 m² et 10 m² et possède une hauteur de lit de filtration préférentiellement comprise entre 60 cm et 1 m, plus préférentiellement entre 80 cm et 95 cm, de manière préférée de 90 cm.

11. Cuve d'épuration selon l'une quelconque des revendications 7 à 10, dans laquelle le lit filtrant comprend préférentiellement un matériau filtrant homogène mais ledit lit filtrant peut aussi comprendre au moins un matériau filtrant additionnel choisi dans le groupe du Xylit, des coques concassés de fruits à coque, du bois pyrolysé, du bois brut, et des fibres végétales, ledit matériau filtrant et ledit matériau filtrant additionnel étant agencés en mélange ou en couches superposées selon la direction fluidique de filtration.

12. Procédé d'épuration d'eaux usées dans une cuve d'épuration comprenant une zone de décantation et une zone de filtration comprenant un lit filtrant de matériau filtrant selon l'une quelconque des revendications 1 à 6, ledit lit filtrant présentant une face amont de lit filtrant et une face aval de lit filtrant selon une direction fluidique de filtration, ledit procédé comprenant les étapes de :
- une admission d'eaux usées dans la zone de décantation,
- une décantation des matières solides en suspension dans la zone de décantation formant un lit de matières solides décantées et une phase liquide clarifiée,
- un transfert de la phase liquide clarifiée vers la zone de filtration,
- une répartition de la phase liquide clarifiée en une pluralité de positions à la face amont du lit filtrant,
- une filtration de la phase liquide clarifiée au travers du lit filtrant selon la direction fluidique de filtration avec une obtention d'eaux filtrées, et
- une évacuation des eaux filtrées par au moins une sortie d'eaux filtrées.

13. Procédé d'épuration d'eaux usées dans une cuve d'épuration selon la revendication 12, dans lequel les eaux usées présentent une teneur initiale en ion nitrate et les eaux filtrées présentent une teneur en ion nitrate au moins 2 fois supérieure, préférentiellement au moins 3 fois supérieure, de manière favorable au moins 5 fois supérieure à la teneur initiale en ion nitrate des eaux usées, et/ou dans lequel les eaux usées présentent une teneur initiale en ion ammonium et les eaux filtrées présentent une teneur en ion ammonium diminuée d'au moins 50%, préférentiellement au moins 60%, de manière favorable au moins 70% par rapport à la teneur initiale en ion ammonium des eaux usées.

14. Procédé d'épuration d'eaux usées dans une cuve d'épuration selon la revendication 12 ou la revendication 13, dans lequel les eaux filtrées présentent une demande biochimique en oxygène, DBOs, inférieure ou égale à 35 mgO₂.I⁻¹, préférentiellement inférieure ou égale à 30 mgO₂.I⁻¹, de manière favorable inférieure ou égale à 20 mgO₂.I⁻¹.
